# EUROPÄISCHE PATENTSCHRIFT

(11) **EP 2 939 336 B1**
(45) Veröffentlichungstag und Bekanntmachung des Hinweises auf die Patenterteilung: **08.07.2020**
(21) Anmeldenummer: 13782714.3
(22) Anmeldetag: 24.10.2013
(51) Int. Cl.: H02K 41/03

(54) **LINEARANTRIEB**
LINEAR DRIVE
ENTRAINEMENT LINEAIRE

(30) Priorität: 27.12.2012 DE 102012224367
(43) Veröffentlichungstag der Anmeldung: 04.11.2015
(73) Patentinhaber: Syntegon Technology GmbH, 71332 Waiblingen (DE)
(72) Erfinder: PREUSS, Felix, 70199 Stuttgart (DE)
(74) Vertreter: DREISS Patentanwälte PartG mbB
(86) Internationale Anmeldenummer: PCT/EP2013/072251
(87) Internationale Veröffentlichungsnummer: WO 2014/102022

(56) Entgegenhaltungen:
- WO-A1-2006/108852
- DE-A1- 4 126 454
- DE-A1- 10 334 736
- DE-A1-102008 018 078
- US-A1- 2007 013 328

## Beschreibung

### Stand der Technik

Die vorliegende Erfindung betrifft einen Linearantrieb, insbesondere einen linearen Direktantrieb.

Linearantriebe weisen in der Regel eine Laufbahn mit mehreren stationären Primärmagneten auf. Auf der Laufbahn ist zumindest eine Bewegungseinheit linear beweglich angeordnet. In der Bewegungseinheit sind Sekundärmagneten vorgesehen. Die Primärmagneten wirken magnetisch auf die Sekundärmagneten, so dass je nach Ansteuerung der Primärmagneten die Bewegungseinheit entlang der Laufbahn bewegt werden kann. Zur Handhabung der Bewegungseinheiten selbst sowie beispielsweise zum Halten oder Greifen von Gegenständen auf der Bewegungseinheit bedarf es einer Übertragung von mechanischer oder elektrischer Energie auf die Bewegungseinheit. Im Stand der Technik erfolgt diese Energieübertragung über Kabel, Schläuche oder Schleifkontakte. Darüber hinaus gibt es im Stand der Technik beispielsweise externe Kurven oder mechanische Anschläge, über die mechanische Energie oder ein mechanisches Steuersignal auf die Bewegungseinheit übertragen werden kann. Dabei ist der Ort der Energie- oder Steuersignalübertragung fest durch die Position der externen Kurven oder Anschläge definiert.

DE 103 34 736 A1 beschreibt einen Linearantrieb und dessen Fortbewegungs- bzw. Bewegungsregelung.

DE 41 26 454 A1 beschreibt einen Synchron-Linearantrieb, mit einem vorzugsweise als am Fahrweg angeordneter Langstator ausgebildeten Stator mit Statorwicklungen zur Erzeugung eines Wanderfeldes für den Antrieb eines bewegten Teils, und einem vorzugsweise am bewegten Teil vorhandenen Erregerteil mit gleichstromgespeister Erregerwicklung.

US 2007/013328 A1 beschreibt einen Linearmotor mit einer progressiven Bewegungssteuerung, z. B. einen Linearmotor mit mehreren sekundären Komponenten (bewegten Komponenten).

### Offenbarung der Erfindung

Mit dem erfindungsgemäßen Linearantrieb gemäß den Merkmalen des Anspruches 1 ist es möglich, unabhängig vom Antrieb der Bewegungseinheit zusätzliche Energie auf die Bewegungseinheit zu übertragen. Es bedarf hier keiner mitgeführten Kabel oder Schleifkontakte. Die Energieübertragung auf die Bewegungseinheit ist somit verschleiß- und reibungslos. Des Weiteren kann die erfindungsgemäße Übertragung der Energie auch bei kontinuierlich umlaufenden Laufbahnen verwendet werden. All diese Vorteile werden erreicht durch einen erfindungsgemäßen Linearantrieb, insbesondere einen linearen Direktantrieb, umfassend eine Laufbahn. Die Laufbahn ist insbesondere kontinuierlich, also als geschlossener Ring, ausgebildet. Des Weiteren umfasst der Linearantrieb zumindest eine auf der Laufbahn linear bewegliche Bewegungseinheit. Die Bewegungseinheit umfasst zumindest ein magnetisches Element, vorzugsweise als Sekundäreisenkreis und/oder als Sekundärmagneten ausgebildet. Insbesondere ist das magnetische Element als Permanent- oder Elektromagnet ausgebildet. Darüber hinaus sind mehrere auf der Laufbahn stationär angeordnete Primärmagneten vorgesehen. Die Primärmagneten sind als Elektromagneten, beispielsweise als Spulen, ausgebildet. Durch ein einzelnes oder gruppenweises Ansteuern der Primärmagneten wirkt eine magnetische Kraft auf die magnetischen Elemente, so dass die Bewegungseinheit entlang der Laufbahn bewegt werden kann. Auf der Bewegungseinheit ist ein magnetisch aktivierbares Element vorgesehen. Dieses magnetisch aktivierbare Element wird durch zumindest einen Primärmagneten, insbesondere zur Energieübertragung auf das magnetisch aktivierbare Element, angesteuert. Die Ansteuerung des magnetisch aktivierbaren Elements erfolgt dabei unabhängig von dem Antrieb der Bewegungseinheit. Des Weiteren ist auf der Bewegungseinheit ein Aktuator und/oder ein Verbraucher angeordnet. Das magnetisch aktivierbare Element ist mit dem Aktuator und/oder Verbraucher wirkverbunden. Im Rahmen der Erfindung wurde erkannt, dass die momentan nicht genutzten Primärmagneten zur Energieübertragung auf die Bewegungseinheit genutzt werden können. Es ist vorgesehen, dass zum Ansteuern des magnetisch aktivierbaren Elements, insbesondere zur Energieübertragung auf das magnetisch aktivierbare Element, zumindest ein Primärmagnet verwendbar ist, der im Moment der Ansteuerung nicht zum Antrieb der Bewegungseinheit genutzt wird. Hierzu ist das magnetisch aktivierbare Element auf der Bewegungseinheit vorgesehen, das sich stets in dem potentiellen Magnetfeld der Primärmagneten befindet. Die Erfindung ermöglicht es, über die vorhandene Infrastruktur des Linearantriebs, durch eine separate Ansteuerung der Primärspulen einen unabhängig steuerbaren, auf das magnetisch aktivierbare Element wirkenden Magnetkreis zu realisieren. Dieser Magnetkreis ermöglicht u.a. die Erzeugung mechanischer Energie auf der Transporteinheit, ohne eine externe Energieleitung, z.B. über Kabel oder Schläuche. Insbesondere für umlaufende Transportsysteme, bei denen die Laufbahn einen geschlossenen Ring darstellt, ermöglicht die Erfindung eine Vielzahl an unabhängig steuerbaren Aktuatoren und Verbrauchern auf dem Bewegungselement. Die Erfindung ermöglicht es, magnetische Energie an jeder Stelle des Linearantriebs zu übertragen, ohne die Antriebsleistung zu beeinträchtigen.

Die Unteransprüche zeigen bevorzugte Weiterbildungen der Erfindung.

Wesentlich bei der Erfindung ist, dass die ohnehin vorhandenen Primärmagneten zur Energieübertragung auf das magnetisch aktivierbare Element genutzt werden. Dazu werden vorteilhafterweise diejenigen Primärmagneten verwendet, welche sich in unmittelbarer Nähe zur Bewegungseinheit befinden, jedoch nicht am Antrieb selbst beteiligt sind, folglich im Moment ungenutzt sind. Dies ermöglicht eine einfache Ansteuerung bzw. Energieübertragung auf das magnetisch aktivierbare Element über die Steuersoftware des Linearantriebs an jeder Stelle des Systems auf beliebig vielen Bewegungseinheiten unabhängig voneinander.

Des Weiteren ist bevorzugt vorgesehen, dass das magnetisch aktivierbare Element mechanisch auf den Aktuator wirkt. Insbesondere ist hierzu das magnetisch aktivierbare Element als ferromagnetisches Bauteil oder als Permanentmagnet ausgebildet.

Darüber hinaus ist bevorzugt vorgesehen, dass das magnetisch aktivierbare Element in Bewegungsrichtung der Bewegungseinheit vor oder hinter den magnetischen Elementen angeordnet ist. Dadurch ist das magnetisch aktivierbare Element möglichst nahe an den Primärmagneten, die im Moment der Ansteuerung des magnetisch aktivierbaren Elements nicht zum Antrieb der Bewegungseinheit genutzt werden.

Des Weiteren ist bevorzugt vorgesehen, dass das magnetisch aktivierbare Element eine Induktionsspule umfasst. Mittels der Primärmagneten kann Spannung in die Induktionsspule induziert werden. Der Verbraucher und/oder der Aktuator auf dem Bewegungselement werden über die Induktionsspule bevorzugt mit Strom versorgt.

Der Aktuator ist bevorzugt zum Bewegen und/oder Halten von Gegenständen auf der Bewegungseinheit ausgebildet.

Alternativ oder zusätzlich dazu ist der Aktuator zum Schalten mechanischer Vorrichtungen und/oder zum Schalten von Stromkreisen ausgebildet.

Des Weiteren ist es möglich, dass der Aktuator zum Schalten einer die Laufeigenschaften der Bewegungseinheit verändernden Vorrichtung ausgebildet ist.

Insbesondere ist vorgesehen, dass der Aktuator und/oder der Verbraucher auf der Bewegungseinheit wie folgt ausgebildet sind: als Greifer und/oder Mitnehmer und/oder zum Schalten von Ventilen und/oder zum Erzeugen von Vibrationen und/oder zum Bewegen von Gegenständen und/oder als Koppelsystem zum Ein- und Auskoppeln mehrerer Bewegungseinheiten untereinander und/oder zum Einschleusen/Ausschleusen von Produkten und/oder zum Erzeugen von Pumpbewegungen (Druckluft oder Vakuum) und/oder zum Erzeugen von Stößelbewegungen (z.B. zum Verdichten) und/oder zum Antreiben eines elektrischen Generators und/oder zum Antreiben einer Membranpumpe und/oder zum Schalten von Weichen auf der Laufbahn und/oder zum Ein-/Ausschleusen der Bewegungseinheiten selbst (Überwindung der magnetischen Anziehungskraft) und/oder zum Schalten magnetischer Formgedächtnislegierungen und/oder zum Schalten von Stromkreisen und/oder zum Aktivieren mechanischer Bremssysteme (Not-Aus) und/oder als Statusanzeige (Positionsanzeige) und/oder als Mikrosteuerung.

### Kurze Beschreibung der Zeichnungen

Nachfolgend werden Ausführungsbeispiele der Erfindung unter Bezugnahme auf die begleitende Zeichnung im Detail beschrieben. Dabei zeigen:
- Figur 1: eine schematisch vereinfachte Ansicht eines erfindungsgemäßen Linearantriebs für beide Ausführungsbeispiele,
- Figur 2: den erfindungsgemäßen Linearantrieb gemäß einem ersten Ausführungsbeispiel,
- Figur 3: ein Detail des erfindungsgemäßen Linearantriebs gemäß dem ersten Ausführungsbeispiel, und
- Figur 4: ein Detail des erfindungsgemäßen Linearantriebs gemäß einem zweiten Ausführungsbeispiel.

### Ausführungsformen der Erfindung

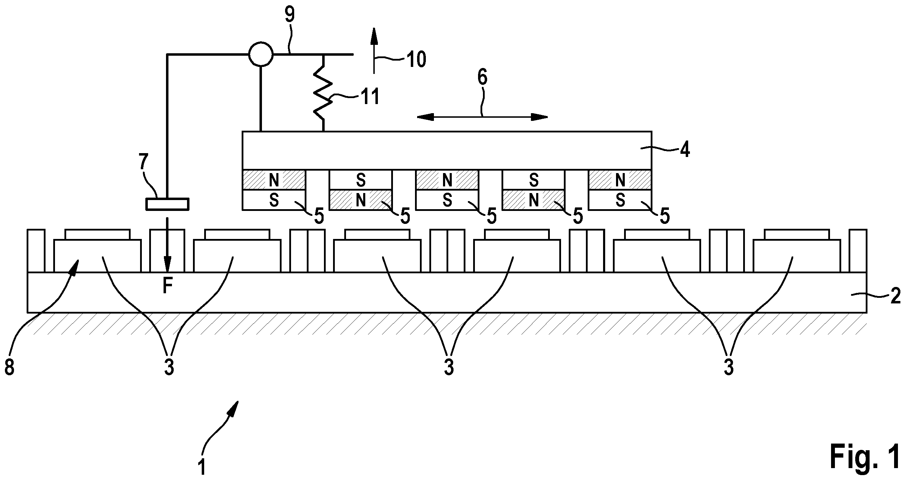

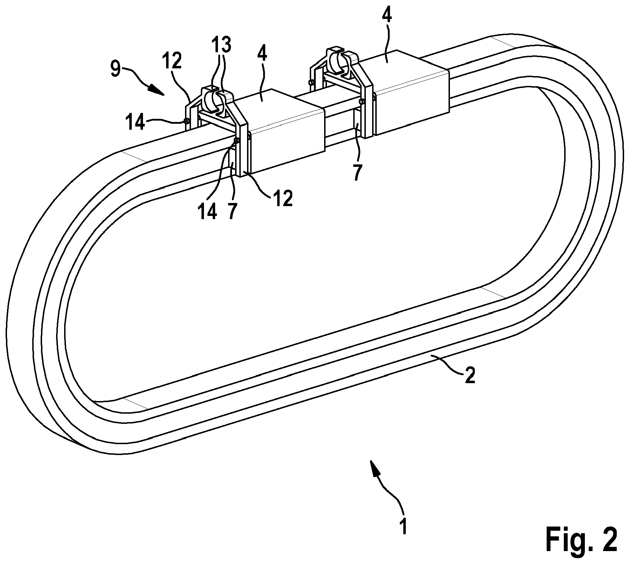

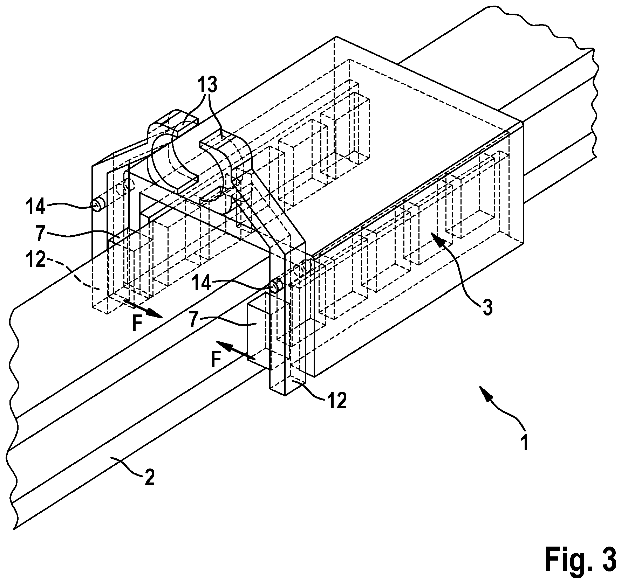

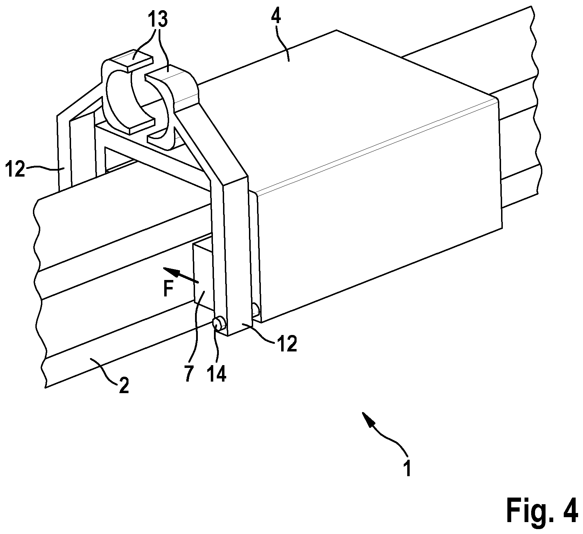

Im Folgenden wird anhand von Figur 1 in schematisch vereinfachter Darstellung ein Linearantrieb 1 für beide Ausführungsbeispiele gezeigt. Figuren 2 und 3 zeigen das erste Ausführungsbeispiel. Figur 4 zeigt ein Detail des zweiten Ausführungsbeispiels. Gleiche bzw. funktional gleiche Bauteile sind in allen Ausführungsbeispielen mit denselben Bezugszeichen versehen.

Gemäß Figur 1 umfasst der Linearantrieb 1 eine Laufbahn 2. Auf der Laufbahn 2 sind mehrere Primärmagneten 3 stationär angeordnet. Die Primärmagneten 3 sind als Spulen ausgebildet.

Auf der Laufbahn 2 ist zumindest eine Bewegungseinheit 4 in Bewegungsrichtung 6 linear beweglich. Auf der Bewegungseinheit 4 sind mehrere magnetische Elemente 5, ausgebildet als sekundäre Permanentmagneten, angeordnet.

Die Primärmagneten 3 können einzeln oder in Gruppen angesteuert werden. Dadurch ist eine Linearbewegung der Bewegungseinheit 4 auf der Laufbahn 2 möglich. Durch die einzelne oder gruppenweise Ansteuerung können auf der Laufbahn 2 mehrere Bewegungseinheiten 4 unabhängig voneinander angesteuert und bewegt werden.

Auf der Bewegungseinheit 4 ist ein magnetisch aktivierbares Element 7 angeordnet. Das magnetisch aktivierbare Element 7 ist mechanisch verbunden mit einem Aktuator 9. Im dargestellten Beispiel wird der linke Permanentmagnet 8 momentan nicht zum Antrieb genutzt. Deshalb kann der linke Primärmagnet 8 zur Ansteuerung des magnetisch aktivierbaren Elements 7 genutzt werden. Mittels des linken Primärmagneten 8 wird die eingezeichnete Kraft F auf das magnetisch aktivierbare Element 7 übertragen. Durch die Kraft F wird der Aktuator 9 gemäß der eingezeichneten Aktuatorbewegung 10 bewegt. Ein Rückstellelement 11, ausgebildet als Feder, bringt den Aktuator 9 wieder in seine Ausgangsstellung.

Figur 1 zeigt lediglich das schematische Prinzip der Erfindung. Durch Ansteuern des magnetisch aktivierbaren Elementes 7 können alle möglichen Aktuatoren 9 auf der Bewegungseinheit 4 bewegt werden. Des Weiteren ist es möglich, das magnetisch aktivierbare Element 7 nicht als ferromagnetisches oder permanentmagnetisches Bauteil, sondern als Spule auszugestalten. In diese Spule kann gezielt Spannung induziert werden. Diese Spannung wiederum kann sowohl zum Schalten eines Aktuators als auch zur Stromversorgung eines Verbrauchers auf der Bewegungseinheit 4 genutzt werden.

Figur 2 zeigt den Linearantrieb 1 gemäß dem ersten Ausführungsbeispiel. Gemäß Figur 2 ist die Laufbahn 2 kontinuierlich, also als geschlossener Ring, ausgestaltet. Auf der Laufbahn 2 befinden sich zwei Bewegungseinheiten 4, die unabhängig voneinander bewegt werden können.

Figur 3 zeigt in teilweise transparenter Ansicht ein Detail aus Figur 2.

Es sind zwei magnetisch aktivierbare Elemente 7, ausgebildet als ferromagnetische Bauteile, vorgesehen. Durch entsprechende Ansteuerung der Primärmagneten 3 können die magnetisch aktivierbaren Elemente 7 nach Innen bewegt werden. Der Aktuator 9 umfasst zwei Hebel 12, die jeweils über einen Drehpunkt 14 mit der Bewegungseinheit 4 verbunden sind. Die oberen Enden der Hebel 12 sind als eine Greifkontur 13 ausgebildet. Durch Bewegen der magnetisch aktivierbaren Elemente 7 nach Innen, öffnet sich im ersten Ausführungsbeispiel die Greifkontur 13, da die Drehpunkte 14 zwischen der Kreiskontur 13 und den magnetisch aktivierbaren Elementen 7 angeordnet sind.

Figur 4 zeigt ein Detail des Linearantriebs 1 gemäß dem zweiten Ausführungsbeispiel. Im zweiten Ausführungsbeispiel sind die magnetisch aktivierbaren Elemente 7 und die Greifkontur 13 auf einer Seite der Drehpunkte 14 angeordnet. Dadurch schließt sich die Greifkontur 13 bei einem Bewegen der magnetisch aktivierbaren Elemente 7 nach Innen.

## Patentansprüche

1. Linearantrieb (1), umfassend
- eine Laufbahn (2),
- zumindest eine auf der Laufbahn (2) linearbewegliche Bewegungseinheit (4) mit zumindest einem magnetischen Element (5), vorzugsweise einem Sekundärmagneten,
- mehrere auf der Laufbahn (2) stationär angeordnete, elektrische Primärmagneten (3), die magnetisch auf das zumindest eine magnetische Element (5) wirken, wobei die Primärmagneten (3) einzeln oder in Gruppen zum Antrieb der Bewegungseinheit (4) ansteuerbar sind,
- ein magnetisch aktivierbares Element (7) auf der Bewegungseinheit (4),
- einen Aktuator (9) und/oder einen Verbraucher auf der Bewegungseinheit (4), wobei das magnetisch aktivierbare Element (7) mit dem Aktuator (4) und/oder dem Verbraucher wirkverbunden ist,
**dadurch gekennzeichnet, dass**
das magnetisch aktivierbare Element (7) durch zumindest einen Primärmagneten (3), unabhängig vom Antrieb der Bewegungseinheit (4), insbesondere zur Energieübertragung auf das magnetisch aktivierbare Element, ansteuerbar ist, und zum Ansteuern des magnetisch aktivierbaren Elements (7) zumindest ein Primärmagnet verwendbar ist, der im Moment der Ansteuerung nicht zum Antrieb der Bewegungseinheit genutzt wird.

2. Linearantrieb nach dem vorhergehenden Anspruch, **dadurch gekennzeichnet, dass** das magnetisch aktivierbare Element (7) einen Permanentmagneten oder ein ferromagnetisches Bauteil umfasst.

3. Linearantrieb nach einem der vorhergehenden Ansprüche, **dadurch gekennzeichnet, dass** das magnetisch aktivierbare Element (7) mechanisch auf den Aktuator (9) wirkt.

4. Linearantrieb nach einem der vorhergehenden Ansprüche, **dadurch gekennzeichnet, dass** das magnetisch aktivierbare Element (7) in Bewegungsrichtung (6) der Bewegungseinheit (4) vor oder hinter dem magnetischen Element (5) angeordnet ist.

5. Linearantrieb nach einem der vorhergehenden Ansprüche, **dadurch gekennzeichnet, dass** das magnetisch aktivierbare Element (7) eine Induktionsspule umfasst, wobei mittels eines Primärmagneten (3) Spannung in die Induktionsspule induzierbar ist.

6. Linearantrieb nach Anspruch 5, **dadurch gekennzeichnet, dass** der Verbraucher und/oder der Aktuator (9) über die Induktionsspule mit Strom versorgbar sind.

7. Linearantrieb nach einem der vorhergehenden Ansprüche, **dadurch gekennzeichnet, dass** der Aktuator (9) zum Bewegen und/oder Halten von Gegenständen auf der Bewegungseinheit (4) ausgebildet ist.

8. Linearantrieb nach einem der vorhergehenden Ansprüche, **dadurch gekennzeichnet, dass** der Aktuator (9) zum Schalten mechanischer Vorrichtungen und/oder von Stromkreisen ausgebildet ist.

9. Linearantrieb nach einem der vorhergehenden Ansprüche, **dadurch gekennzeichnet, dass** der Aktuator (9) zum Schalten einer die Laufeigenschaft der Bewegungseinheit (4) verändernden Vorrichtung ausgebildet ist.

## Claims

1. Linear drive (1), comprising
- a running track (2),
- at least one movement unit (4) which is linearly movable on the running track (2) and has at least one magnetic element (5), preferably a secondary magnet,
- a plurality of electrical primary magnets (3) which are arranged on the running track (2) in a stationary manner and which act magnetically on the at least one magnetic element (5), the primary magnets (3) being actuatable individually or in groups in order to drive the movement unit (4),
- a magnetically activatable element (7) on the movement unit (4),
- an actuator (9) and/or a load on the movement unit (4), the magnetically activatable element (7) being operatively connected to the actuator (4) and/or the load, **characterized in that**
the magnetically activatable element (7) can be actuated by at least one primary magnet (3), independently of driving the movement unit (4), in particular for energy transfer to the magnetically activatable element, and at least one primary magnet can be used to actuate the magnetically activatable element (7), which primary magnet is not used for driving the movement unit at the moment of actuation.

2. Linear drive according to the preceding claim, **characterized in that** the magnetically activatable element (7) comprises a permanent magnet or a ferromagnetic component.

3. Linear drive according to either of the preceding claims, **characterized in that** the magnetically activatable element (7) acts mechanically on the actuator (9).

4. Linear drive according to any of the preceding claims, **characterized in that** the magnetically activatable element (7) is arranged in front of or behind the magnetic element (5) in the direction of movement (6) of the movement unit (4).

5. Linear drive according to any of the preceding claims, **characterized in that** the magnetically activatable element (7) comprises an induction coil, voltage being inducible in the induction coil by means of a primary magnet (3).

6. Linear drive according to claim 5, **characterized in that** the load and/or the actuator (9) can be supplied with current via the induction coil.

7. Linear drive according to any of the preceding claims, **characterized in that** the actuator (9) is designed for moving and/or holding objects on the movement unit (4).

8. Linear drive according to any of the preceding claims, **characterized in that** the actuator (9) is designed for switching mechanical devices and/or circuits.

9. Linear drive according to any of the preceding claims, **characterized in that** the actuator (9) is designed for switching a device which changes the running property of the movement unit (4).

## Revendications

1. Entraînement linéaire (1), comprenant
- une glissière (2),
- au moins une unité de déplacement (4) pouvant se déplacer linéairement sur la glissière (2) et comportant au moins un élément magnétique (5), de préférence un aimant secondaire,
- une pluralité d'aimants primaires électriques (3) disposés de manière fixe sur la glissière (2), lesquels agissent par magnétisme sur l'au moins un élément magnétique (5), les aimants primaires (3) pouvant être commandés individuellement ou en groupe pour entraîner l'unité de déplacement (4),
- un élément (7) pouvant être activé par magnétisme et disposé sur l'unité de déplacement (4),
- un actionneur (9) et/ou un consommateur disposé sur l'unité de déplacement (4), l'élément (7) pouvant être activé par magnétisme coopérant avec l'actionneur (4) et/ou avec le consommateur,
**caractérisé en ce que**
l'élément (7) pouvant être activé par magnétisme peut être commandé par au moins un aimant primaire (3), indépendamment de l'entraînement de l'unité de déplacement (4), en particulier pour le transfert d'énergie vers l'élément pouvant être activé par magnétisme, et **en ce qu'**au moins un aimant primaire peut être utilisé pour commander l'élément (7) pouvant être activé par magnétisme, lequel au moins un aimant primaire n'est pas utilisé pour entraîner l'unité de déplacement au moment de la commande.

2. Entraînement linéaire selon la revendication précédente, **caractérisé en ce que** l'élément (7) pouvant être activé par magnétisme comprend un aimant permanent ou un composant ferromagnétique.

3. Entraînement linéaire selon l'une des revendications précédentes, **caractérisé en ce que** l'élément (7) pouvant être activé par magnétisme agit mécaniquement sur l'actionneur (9).

4. Entraînement linéaire selon l'une des revendications précédentes, **caractérisé en ce que** l'élément (7) pouvant être activé par magnétisme est disposé devant ou derrière l'élément magnétique (5) dans le sens de déplacement (6) de l'unité de déplacement (4).

5. Entraînement linéaire selon l'une des revendications précédentes, **caractérisé en ce que** l'élément (7) pouvant être activé par magnétisme comprend une bobine d'induction, une tension pouvant être induite dans la bobine d'induction au moyen d'un aimant primaire (3).

6. Entraînement linéaire selon la revendication 5, **caractérisé en ce que** le consommateur et/ou l'actionneur (9) peuvent être alimentés en courant par l'intermédiaire de la bobine d'induction.

7. Entraînement linéaire selon l'une des revendications précédentes, **caractérisé en ce que** l'actionneur (9) est conçu pour déplacer et/ou retenir des objets sur l'unité de déplacement (4).

8. Entraînement linéaire selon l'une des revendications précédentes, **caractérisé en ce que** l'actionneur (9) est conçu pour commuter des dispositifs mécaniques et/ou des circuits de courant.

9. Entraînement linéaire selon l'une des revendications précédentes, **caractérisé en ce que** l'actionneur (9) est conçu pour commuter un dispositif qui modifie la propriété de roulement de l'unité de déplacement (4).
